(19) Europäisches Patentamt / European Patent Office / Office européen des brevets

(11) **EP 4 390 607 B1**

(12) **FASCICULE DE BREVET EUROPEEN**

(45) Date de publication et mention de la délivrance du brevet:
**01.04.2026 Bulletin 2026/14**

(21) Numéro de dépôt: **23217899.6**

(22) Date de dépôt: **19.12.2023**

(51) Classification Internationale des Brevets (IPC):
**G05D 23/19** *(2006.01)*

(52) Classification Coopérative des Brevets (CPC):
**G05D 23/1931; F24H 15/152; F24H 15/172; F24H 15/254; F24H 15/258; F24H 15/262; F24H 15/269; F24H 15/414; G05D 23/1917;** F24D 19/1009; F24F 11/62

(54) **PROCÉDÉ DE DÉTERMINATION D'UN INSTANT D'ACTIVATION D'UN SYSTÈME DE CHAUFFAGE D'UN BÂTIMENT**

VERFAHREN ZUR BESTIMMUNG EINES AKTIVIERUNGSZEITPUNKTS EINES HEIZSYSTEMS EINES GEBÄUDES

METHOD FOR DETERMINING AN INSTANT OF ACTIVATION OF A HEATING SYSTEM OF A BUILDING

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **20.12.2022 FR 2213946**

(43) Date de publication de la demande:
**26.06.2024 Bulletin 2024/26**

(73) Titulaire: **Delta Dore**
**35270 Bonnemain (FR)**

(72) Inventeurs:
• **BRUN, Adrien**
**38054 Grenoble (FR)**
• **BERNAUD, Pierre**
**38054 Grenoble (FR)**
• **LE DUC, Minh Khang**
**35270 Bonnemain (FR)**
• **PLEVIN, Jacques**
**35270 Bonnemain (FR)**

(74) Mandataire: **Cabinet Le Guen Maillet**
**3, impasse de la Vigie**
**CS 71840**
**35418 Saint-Malo Cedex (FR)**

(56) Documents cités:
**EP-B1- 3 528 083**

**Description**

DOMAINE TECHNIQUE

La présente invention concerne le domaine de la thermique du bâtiment et plus précisément le pilotage d'équipements destinés à fournir des apports thermiques à un bâtiment. La présente invention concerne en outre le domaine des méthodes d'estimation de l'évolution de la température intérieure à un bâtiment.

ETAT DE LA TECHNIQUE ANTERIEURE

Une programmation temporelle permet de définir des températures de consigne devant être atteintes sur différentes plages horaires prédéfinies. Dans un bâtiment, l'implémentation d'une telle programmation temporelle nécessite d'activer ou redémarrer un système de chauffage avant le début d'une plage horaire prédéfinie pour obtenir la température de consigne souhaitée au début de ladite plage horaire prédéfinie.

Plusieurs méthodes ont été développées afin d'estimer l'évolution d'une température intérieure d'un bâtiment pour pouvoir déterminer à quel moment activer le système de chauffage afin d'assurer le respect de la température de consigne tout en minimisant la consommation énergétique liée au système de chauffage. Toutefois, de telles méthodes sont généralement basées sur des modèles thermiques complexes nécessitant des capacités de calcul importantes et/ou des données précises dont l'obtention n'est pas toujours aisée. En outre, les conditions météorologiques peuvent influer considérablement sur l'évolution de la température intérieure. Les méthodes peuvent donc perdre de leur précision lorsque les conditions météorologiques varient.

Il est alors souhaitable de pallier ces inconvénients de l'état de la technique. Il est notamment souhaitable de fournir une solution qui permette d'estimer une évolution de la température intérieure de manière rapide et précise, tout en requérant une puissance de calcul limitée, afin de déterminer un instant d'activation du système de chauffage. Il est en outre souhaitable de fournir une solution prenant en compte des variations de conditions météorologiques.

Le document EP3528083B1 divulgue un thermostat intelligent mettant en œuvre un pré-chauffage fondé sur un modèle prédictif appris par régression, tenant compte notamment du rayonnement solaire et de la température extérieure.

EXPOSE DE L'INVENTION

Un objet de la présente invention est de proposer un procédé de détermination d'un instant d'activation d'un système de chauffage d'un bâtiment. Le procédé est implémenté par une unité de gestion connectée au système de chauffage, le système de chauffage chauffant le bâtiment lorsque ledit système de chauffage est activé. Le procédé comporte : enregistrer des mesures de la température intérieure du bâtiment, dite température intérieure, et de la température extérieure au bâtiment, dite température extérieure, et des valeurs météorologiques prévisionnelles, chaque mesure étant associée à un instant de mesure, chaque valeur météorologique prévisionnelle étant associée à un instant de prévision ; sélectionner au moins une séquence de relance comportant des mesures de température intérieure et extérieure et des valeurs météorologiques prévisionnelles associées à des instants de mesure ou de prévision passés, chaque séquence de relance étant définie, à compter d'un instant initial, par une pluralité d'instants successifs, dits instants sélectionnés, auxquels les mesures de température intérieure vérifient au moins un critère prédéfini ; déterminer, pour chaque instant sélectionné de chaque séquence de relance sélectionnée, une variation de température intérieure entre ledit instant sélectionné et l'instant initial de la séquence de relance ainsi qu'une pluralité de variables, déterminées audit instant sélectionné et en relation avec ledit instant initial, lesdites variables influant sur la variation de température intérieure, au moins une variable étant fonction de la température intérieure et au moins une variable étant fonction de valeurs météorologiques prévisionnelles ; et de calculer, par régression linéaire multiple, un coefficient associé à chaque variable, les coefficients permettant de maximiser, pour l'ensemble des instants sélectionnés, l'égalité entre la variation de température intérieure et la somme des variables associées à leurs propres coefficients. Le procédé comporte en outre de mémoriser les coefficients calculés pour activer le système de chauffage à un instant de mesure de la température intérieure en fonction d'une variation estimée de la température intérieure entre ledit instant de mesure et un instant futur, ladite variation estimée de la température intérieure étant déterminée à partir desdits coefficients mémorisés, appliqués à la pluralité des variables déterminée à l'aide de valeurs météorologiques prévisionnelles et d'une mesure de la température intérieure audit instant de mesure.

Ainsi, il est possible d'estimer l'évolution de la température intérieure du bâtiment de manière rapide et ne nécessitant pas de puissance de calcul élevé puisqu'il s'agit d'un modèle thermique simple comportant une pluralité de variables définies associées chacune à un coefficient, et qui est résolu simplement par implémentation d'une régression linéaire multiple. En outre, les données nécessaires à une telle estimation sont facilement accessibles et le modèle prend en compte des variations de conditions météorologiques. Il est alors possible d'activer le système de chauffage en tenant compte de l'évolution de la température intérieure ainsi estimée, ce qui minimise la consommation d'énergie.

Selon un mode de réalisation particulier, sélectionner au moins une séquence de relance comporte de sélectionner un nombre minimal prédéfini de séquences de relance.

Selon un mode de réalisation particulier, sélectionner au moins une séquence de relance comporte de sélectionner toutes les séquences de relance sur une période d'une durée prédéfinie.

Selon l'invention, l'unité de gestion comporte une programmation temporelle comprenant des températures de consigne, chaque température de consigne étant associée à un instant de consigne auquel la température de consigne doit être atteinte, et dans lequel le au moins un critère prédéfini requiert que la température intérieure est croissante et la température intérieure est inférieure à une température de consigne associée à un instant de consigne de la programmation temporelle survenant en premier après chacun desdits instants sélectionnés, et dans lequel le système de chauffage est en outre activé à chaque instant sélectionné de chaque séquence de relance.

Ainsi, il est possible d'obtenir un modèle permettant d'estimer l'évolution de la température intérieure dans des conditions particulières souhaitées adaptées à une période de relance pour laquelle l'activation du chauffage permet d'atteindre une température de consigne.

Selon l'invention, l'estimation de la température intérieure déterminée à l'instant futur est déterminée à un instant de consigne de la programmation temporelle, le procédé comportant en outre d'activer le système de chauffage si la température intérieure estimée audit instant de consigne est inférieure ou égale à la température de consigne associée audit instant de consigne.

Ainsi, il est possible de déterminer un instant d'activation du système de chauffage de manière précise et rapide et en tenant compte de variations de conditions météorologiques, ce qui permet d'assurer le respect d'une température de consigne tout en minimisant la consommation d'énergie.

Selon l'invention, l'estimation de la température intérieure déterminée à l'instant de consigne est effectuée lorsque le système de chauffage est inactif à l'instant de mesure et lorsque la mesure de la température intérieure audit instant de mesure est inférieure à la température de consigne associée audit instant de consigne. Ainsi, l'estimation de la température intérieure est effectuée uniquement lorsque cela est nécessaire pour déterminer un instant d'activation du système de chauffage, ce qui réduit la consommation liée à l'implémentation du procédé.

Selon un mode de réalisation particulier, les valeurs météorologiques prévisionnelles comprennent des valeurs de la température extérieure, et comprennent des valeurs de rayonnement solaire, et dans lequel la pluralité de variables déterminées à un instant sélectionné en relation avec un instant initial comprend une première variable égale à la différence entre la température intérieure à l'instant initial et la température extérieure audit instant sélectionné, une deuxième variable égale au rayonnement solaire cumulé entre l'instant initial et l'instant sélectionné, et une troisième variable égale à la différence temporelle entre l'instant sélectionné et l'instant initial.

Ainsi, il est possible de tenir compte de l'influence du rayonnement solaire extérieur sur l'évolution de la température intérieure tout en conservant un procédé rapide et qui soit précis grâce à la sélection de séquences de relance selon un critère prédéfini.

Selon un mode de réalisation particulier, calculer, par régression linéaire multiple, un coefficient associé à chaque variable comprend de calculer en outre un coefficient associé à une constante égale à 1.

Selon un mode de réalisation particulier, les coefficients calculés sont obtenus, sous forme d'un vecteur b comprenant chacun desdits coefficients, par résolution de l'équation b = $(X'_a X_a)^{-1} X'_a Y_a$, dans laquelle $X_a$ représente une matrice comportant, pour chaque ligne, un vecteur explicatif associé à un instant sélectionné, chaque instant sélectionné étant associé à une ligne, chaque vecteur explicatif comprenant les variables déterminées à l'instant sélectionné associé et en relation avec l'instant initial de la séquence de relance, dans laquelle $Y_a$ représente un vecteur comportant, pour chaque ligne, la variation de température intérieure associée à un instant sélectionné, égale à la variation de température intérieure entre ledit instant sélectionné et l'instant initial de la séquence de relance, chaque instant sélectionné étant associé à une ligne dans le même ordre que pour la matrice d'apprentissage $X_a$, et dans laquelle $X_a'$ est la transposée de $X_a$ et $(X'_a X_a)^{-1}$ est la matrice inverse de $X'_a X_a$.

L'invention concerne également une unité de gestion destinée à gérer la thermique d'un bâtiment. L'unité de gestion est connectée à un système de chauffage, le système de chauffage chauffant le bâtiment lorsque ledit système de chauffage est activé. L'unité de gestion comporte de la circuiterie électronique configurée pour : enregistrer des mesures de la température intérieure du bâtiment, dite température intérieure, et de la température extérieure au bâtiment, dite température extérieure, et des valeurs météorologiques prévisionnelles, chaque mesure étant associée à un instant de mesure, chaque valeur météorologique prévisionnelle étant associée à un instant de prévision ; sélectionner au moins une séquence de relance comportant des mesures de température intérieure et extérieure et des valeurs météorologiques prévisionnelles associées à des instants de mesure ou de prévision passés, chaque séquence de relance étant définie, à compter d'un instant initial, par une pluralité d'instants successifs, dits instants sélectionnés, auxquels les mesures de température intérieure vérifient au moins un critère prédéfini ; déterminer, pour chaque instant sélectionné de chaque séquence de relance sélectionnée, une variation de température intérieure entre ledit instant sélectionné et l'instant initial de la séquence de relance ainsi qu'une pluralité de variables, déterminées audit instant sélectionné et en relation avec ledit instant initial, lesdites variables influant sur la variation de température intérieure, au moins une variable étant fonction de la température intérieure et au moins une variable étant fonction de valeurs météorologiques prévisionnelles ; calculer, par régression linéaire multiple, un coefficient associé à chaque variable, les coefficients permettant de maximiser, pour l'ensemble des instants sélectionnés, l'égalité entre la variation de température intérieure et la somme des variables associées à leurs propres coefficients. L'unité de gestion comporte en outre de la circuiterie électronique configurée pour mémoriser les coefficients calculés pour activer le système de chauffage à un instant de mesure de la température intérieure en fonction d'une variation estimée de la température intérieure entre ledit instant de mesure et un instant futur, ladite variation estimée de la température intérieure étant déterminée à partir desdits coefficients mémorisés, appliqués à la pluralité des variables déterminée à l'aide de valeurs météorologiques prévisionnelles et d'une mesure de la température intérieure audit instant de mesure.

Il est également proposé un produit programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme d'ordinateur est exécuté par le processeur. L'invention concerne également un support de stockage d'informations stockant un tel programme d'ordinateur comprenant des instructions pour implémenter le procédé mentionné ci-dessus dans l'un quelconque de ses modes de réalisation lorsque ledit programme d'ordinateur est lu depuis ledit support de stockage et exécuté par le processeur.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un bâtiment dans lequel est implémenté un procédé de détermination d'un instant d'activation d'un système de chauffage du bâtiment ;

[Fig. 2] illustre schématiquement une unité de gestion implémentant le procédé de détermination d'un instant d'activation du système de chauffage du bâtiment ;

[Fig. 3] illustre schématiquement une phase d'apprentissage du procédé de détermination d'un instant d'activation du système de chauffage du bâtiment ;

[Fig. 4] illustre schématiquement une phase d'exploitation du procédé de détermination d'un instant d'activation du système de chauffage du bâtiment.

EXPOSE DETAILLE DE MODES DE REALISATION

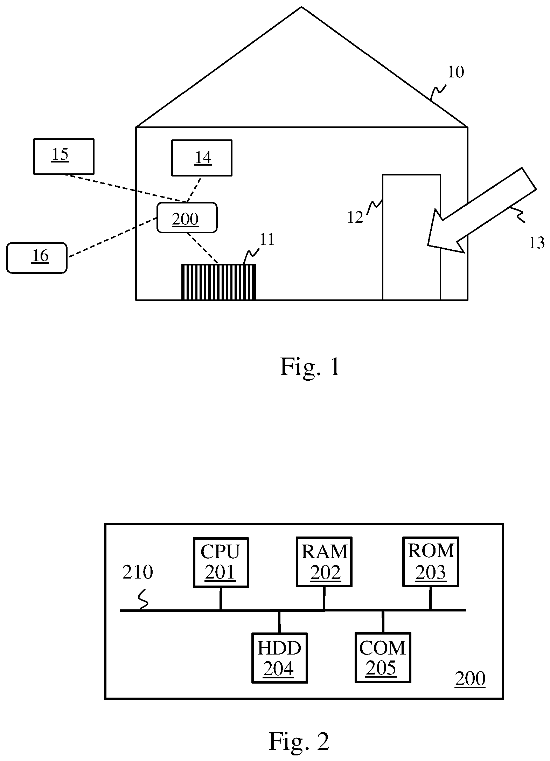

La Fig. 1 illustre ainsi schématiquement un bâtiment 10 dans lequel est implémenté un procédé de détermination d'un instant d'activation d'un système de chauffage 11 impliquant de déterminer une estimation de température intérieure du bâtiment 10 à un instant futur.

Le bâtiment 10 comporte ainsi le système de chauffage 11 qui peut être actif, et chauffe alors le bâtiment 10 en fournissant un apport thermique à l'intérieur du bâtiment 10, ou inactif, et ne fournit alors aucun apport thermique.

Le bâtiment 10 comporte en outre au moins une paroi vitrée 12 telle qu'une fenêtre par laquelle un rayonnement solaire 13 peut être transmis au bâtiment 10 sous forme d'apport thermique.

Le bâtiment 10 comporte un premier capteur de température 14 configuré pour mesurer la température intérieure du bâtiment 10, dite température intérieure $T_{int}$, et comporte un deuxième capteur de température 15 configuré pour mesurer la température extérieure au bâtiment 10, dite température extérieure $T_{ext}$.

Le procédé de détermination d'un instant d'activation du système de chauffage 11 est implémenté par une unité de gestion 200.

Afin de déterminer la température intérieure $T_{int}$ à un instant futur, l'unité de gestion 200 estime une variation de la température intérieure $\Delta T_{int}$ entre un instant actuel et l'instant futur sur la base d'un modèle prenant en compte une pluralité de variables, les variables étant explicatives de la variation de la température intérieure, autrement dit influant sur la variation de la température intérieure, et caractérisant les apports thermiques fournis au bâtiment 10 et les déperditions thermiques s'échappant du bâtiment 10.

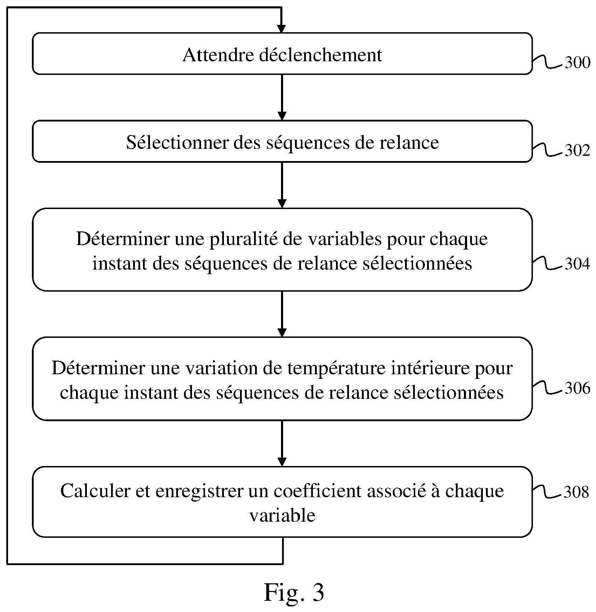

Selon un mode de réalisation, une première variable est représentative des apports thermiques fournis par le système de chauffage 11 et prend en compte une isolation thermique entre le bâtiment 10 et l'extérieur du bâtiment 10 résultant par exemple de parois, murs et vitres du bâtiment 10. Une deuxième variable caractérise les apports thermiques pouvant être fournis par le rayonnement solaire 13 à travers la au moins une paroi vitrée 12. Une troisième variable caractérise les déperditions thermiques du bâtiment 10 au cours du temps. La pluralité de variables sera explicitée ci-dessous, à l'étape 304 de la Fig. 3.

L'unité de gestion 200 est reliée aux premier et deuxième capteurs de température 14, 15, et peut ainsi obtenir des mesures de température intérieure $T_{int}$ et de température extérieure $T_{ext}$ au cours du temps, chaque mesure étant associée à un instant de mesure. La température intérieure $T_{int}$ et la température extérieure $T_{ext}$ sont mesurées par le premier capteur de température 14, respectivement par le deuxième capteur de température 15, avec une périodicité prédéfinie, par exemple toutes les secondes. L'unité de gestion 200 reçoit chaque mesure de température intérieure $T_{int}$, respectivement extérieure $T_{ext}$, à intervalles réguliers, par exemple toutes les 5 à 6 minutes pour la température intérieure $T_{int}$, par le premier capteur de température 14, et toutes les 15 minutes pour la température extérieure $T_{ext}$, par le deuxième capteur de température 15. L'unité de gestion 200 enregistre les mesures de température intérieure $T_{int}$ et de température extérieure $T_{ext}$ au fur et à mesure de leur réception. Selon un mode de réalisation, l'unité de gestion 200 reçoit en outre une mesure de température intérieure $T_{int}$, respectivement extérieure $T_{ext}$, lorsque la variation de température dépasse une variation égale à 0,5°C par rapport à la mesure de température reçue précédemment.

Le bâtiment 10 est associé à une programmation temporelle comportant une pluralité de températures de consigne $T_{cons}$, chaque température de consigne $T_{cons}$ étant associée à une plage horaire prédéfinie débutant par un instant, dit instant de consigne $t_{cons}$, auquel la température de consigne $T_{cons}$ doit être atteinte. L'unité de gestion 200 comporte la programmation temporelle associée au bâtiment 10 et connaît ainsi chaque température de consigne et son instant de consigne associé.

L'unité de gestion 200 est reliée au système de chauffage 11 et peut ainsi déterminer l'état actif ou inactif du système de chauffage 11 à un instant donné. L'unité de gestion 200 peut en outre émettre des instructions d'activation ou de désactivation au système de chauffage 11.

L'unité de gestion 200 est en outre reliée, par le biais d'un réseau de communication tel qu'internet, à un service 16 de fourniture de données météorologiques prévisionnelles. L'unité de gestion 200 peut ainsi recevoir des valeurs météorologiques prévisionnelles de la température extérieure $T_{ext}$ et de rayonnement solaire 13, noté rayonnement solaire $Gh$, en fonction du temps. Selon un exemple de réalisation, l'unité de gestion 200 émet, à intervalles réguliers, une requête à destination du service 16 de fourniture de données météorologiques prévisionnelles et reçoit en réponse une pluralité de valeurs météorologiques prévisionnelles successives de température extérieure $T_{ext}$ et une pluralité de valeurs météorologiques prévisionnelles successives de rayonnement solaire $Gh$, chaque valeur météorologique prévisionnelle étant associée à un instant de prévision.

L'unité de gestion 200 enregistre et met à jour, à chaque réception de valeurs météorologiques prévisionnelles représentatives d'un paramètre météorologique donné tel que la température extérieure ou le rayonnement solaire, un vecteur prévisionnel dudit paramètre météorologique. Ledit vecteur prévisionnel comporte, pour chaque instant de prévision, la valeur météorologique prévisionnelle associée qui a été reçue la plus récemment. En outre, l'unité de gestion 200 construit un vecteur historique pour chaque paramètre météorologique comportant une pluralité d'instants passés et comportant, en association à chaque instant passé, la valeur météorologique prévisionnelle associée à un instant de prévision égal audit instant passé qui a été reçue en dernier, autrement dit reçue la plus récemment.

L'unité de gestion 200 est configurée pour enregistrer l'ensemble des mesures et valeurs météorologiques prévisionnelles qu'elle reçoit.

La Fig. 2 illustre schématiquement un exemple d'architecture matérielle de l'unité de gestion 200. L'unité de gestion 200 comporte alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un disque dur HDD (« Hard Disk Drive » en anglais) 204 ; et une interface 205 permettant de communiquer avec les premier et deuxième capteurs de température 14, 15, avec le système de chauffage 11, et avec un réseau de communication permettant d'accéder à un service 16 de fourniture de données météorologiques prévisionnelles.

Le processeur 201 est capable d'exécuter des instructions chargées dans la RAM 202 à partir de la ROM 203, d'une mémoire externe (non représentée), d'un support de stockage, ou d'un réseau de communication. Lorsque l'unité de gestion 200 est mis sous tension, le processeur 201 est capable de lire de la RAM 202 des instructions et de les exécuter. Ces instructions forment un programme d'ordinateur causant l'implémentation, par le processeur 203, de tout ou partie des algorithmes et étapes décrits ci-après en relation avec l'unité de gestion 200.

Ainsi, tout ou partie des algorithmes et étapes décrits ci-après en relation l'unité de gestion 200 peut être implémenté sous forme logicielle par exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais).

La Fig. 3 illustre schématiquement une phase d'apprentissage du procédé de détermination d'un instant d'activation du système de chauffage 11, implémentée par l'unité de gestion 200.

Dans une première étape 300, l'unité de gestion 200 attend un déclenchement de la phase d'apprentissage. Par exemple, l'unité de gestion 200 effectue la phase d'apprentissage à intervalles réguliers, et attend ainsi l'écoulement d'une première durée prédéfinie comptée à partir d'une implémentation précédente de la phase d'apprentissage. La première durée prédéfinie est par exemple de 24h et peut être comprise entre 12h et sept jours. Le démarrage de la première implémentation de la phase d'apprentissage peut être déclenché manuellement par un utilisateur. Alternativement, le démarrage de la première implémentation de la phase d'apprentissage est déclenché par l'activation du système de chauffage 11, par exemple après une inactivité du système de chauffage 11 supérieure à plusieurs semaines, comme cela peut être le cas en fin de période estivale.

Dans une étape 302 suivante, l'unité de gestion 200 sélectionne au moins une séquence de relance. Chaque séquence de relance comporte des mesures de la température intérieure $T_{int}$ et de la température extérieure $T_{ext}$ et des valeurs météorologiques prévisionnelles du rayonnement solaire $Gh$ associées à des instants de mesure ou de prévision passés. Les mesures proviennent des premier et deuxième capteurs de température 14 et 15 et sont enregistrées par l'unité de gestion 200. Les valeurs météorologiques prévisionnelles proviennent du service 16 de fourniture de données prévisionnelles et sont enregistrées sous forme de vecteurs historiques par l'unité de gestion 200.

Alternativement, chaque séquence de relance comporte des valeurs météorologiques prévisionnelles de la température extérieure $T_{ext}$. Selon un mode de réalisation particulier, chaque séquence de relance comporte en outre des informations représentatives de l'activation du système de chauffage 11. En outre, chaque séquence de relance j débute par un instant initial, noté $t_0^j$, et est définie par une pluralité d'instants successifs, dits instants sélectionnés, notés $t_i^j$ (*i* et *j* étant des entiers), pour lesquels les mesures et/ou valeurs météorologiques prévisionnelles et/ou informations représentatives de l'activation du système de chauffage 11 vérifient au moins un critère prédéfini. L'unité de gestion 200 sélectionne ainsi, parmi des données enregistrées, des mesures ou données météorologiques prévisionnelles dont les instants de mesure ou de prévision correspondent aux instants $t_i^j$ sélectionnés de chaque séquence de relance j sélectionnée.

Lorsqu'une mesure ou une valeur météorologique prévisionnelle n'est pas définie audit instant $t_i^j$, ladite mesure ou une valeur météorologique prévisionnelle peut être déterminée par interpolation linéaire entre deux mesures ou valeurs météorologiques prévisionnelles représentatives du même paramètre définies pour l'une à un instant antérieur et pour l'autre à un instant postérieur audit instant $t_i^j$ de la séquence de relance j.

Selon l'invention, les mesures et les informations représentatives de l'activation du système de chauffage 11 de chaque séquence de relance sélectionnée vérifient cumulativement un premier, un deuxième et un troisième critères prédéfinis. Le premier critère prédéfini requiert que le système de chauffage 11 soit actif à chacun desdits instants $t_i^j$ successifs. Le deuxième critère prédéfini requiert que la température intérieure $T_{int}$ soit croissante. Par exemple, la température intérieure $T_{int}$ doit être plus élevée à chacun desdits instants $t_i^j$ successifs qu'à l'instant précédent $t_{i-1}^j$ de la séquence de relance j, avec une variation temporelle de température supérieure à 0,2°C par heure. Le troisième critère prédéfini requiert que la température intérieure $T_{int}$ mesurée à tout instant $t_i^j$ de la séquence de relance j soit inférieure à une température de consigne $T_{cons}$ de la programmation temporelle devant être atteinte subséquemment audit instant $t_i^j$, et associée à l'instant de consigne $t_{cons}$ survenant en premier après ledit instant $t_i^j$.

Selon un mode de réalisation, l'unité de gestion 200 sélectionne toutes les séquences de relance sur une période passée d'une deuxième durée prédéfinie, la deuxième durée prédéfinie est par exemple comprise entre 7 jours et 2 mois. Ainsi, il est possible de sélectionner un nombre important de séquences de relance, autrement dit des séquences de relance obtenues dans des conditions suffisamment variées, pour obtenir un modèle précis. En outre, la variabilité liée à des différences entre saisons est limitée. Par exemple, l'effet du rayonnement solaire sur la température intérieure étant différent d'une saison à l'autre en raison de la course du soleil et de l'inclinaison du rayonnement solaire par rapport à une paroi vitrée 12, la deuxième durée prédéfinie est suffisamment restreinte pour que l'effet du rayonnement solaire reste stable.

En variante, l'unité de gestion 200 sélectionne un nombre prédéfini de séquences de relance.

Selon une autre variante, l'unité de gestion 200 sélectionne toutes les séquences de relance sur une période passée de deuxième durée prédéfinie si le nombre de séquences de relance sélectionnées est supérieur à nombre minimal prédéfini, et sélectionne le nombre minimal prédéfini de séquences de relance précédentes sinon, lesdites séquences de relance s'étendant alors sur une période passée supérieure à ladite deuxième durée prédéfinie.

Selon un exemple de réalisation, l'unité de gestion 200 sélectionne les séquences de relance vérifiant en outre un quatrième critère. Le quatrième critère requiert que la différence de température intérieure $T_{int}$ entre l'instant initial $t_0^j$ et un instant final correspondant au dernier instant de la séquence de relance j soit supérieure à une différence de température intérieure prédéfinie égale par exemple à 1°C.

Selon un exemple de réalisation (non représenté), l'unité de gestion 200 détermine en outre si au moins une nouvelle séquence de relance est sélectionnée par rapport à une implémentation précédente de la phase d'apprentissage. Si c'est le cas, l'unité de gestion 200 poursuit dans une étape 304 suivante. Sinon, l'unité de gestion 200 retourne à l'étape 300. Ainsi, l'implémentation de la phase d'apprentissage est effectuée uniquement lorsque de nouvelles mesures et valeurs météorologiques sont prises en compte. Cela permet de réduire la consommation liée au calcul.

A l'étape 304, l'unité de gestion 200 détermine, pour chaque instant sélectionné $t_i^j$ de chaque séquence de relance j sélectionnée, la pluralité de variables audit instant sélectionné $t_i^j$ et en relation avec l'instant initial $t_0^j$ de ladite séquence de relance j.

La première variable, représentative des apports thermiques fournis par le système de chauffage 11 et tenant compte de l'isolation thermique entre le bâtiment 10 et l'extérieur, est fonction de la température intérieure $T_{int}$ et de la température extérieure $T_{ext}$. La première variable est définie par la différence entre la température intérieure $T_{int}$ à l'instant initial $t_0^j$ et la température extérieure $T_{ext}$ audit instant sélectionné $t_i^j$. La deuxième variable, représentative des apports solaires transmis au bâtiment 10, est fonction des valeurs météorologiques prévisionnelles de rayonnement solaire $Gh$. La deuxième variable est définie par le rayonnement solaire $Gh$ cumulé entre l'instant initial $t_0^j$ et ledit instant sélectionné $t_i^j$, qui peut s'écrire $\int_{t_0}^t Gh$. La troisième variable, représentative des déperditions thermiques au cours du temps, est définie par la différence temporelle entre ledit instant sélectionné $t_i^j$ et l'instant initial $t_0^j$. L'unité de gestion 200 détermine en outre une quatrième variable qui est constante et égale à 1.

Il est ainsi possible de prendre en compte l'influence de valeurs météorologiques prévisionnelles telles que le rayonnement solaire sur l'évolution de la température intérieure tout en fournissant un modèle précis grâce à la sélection de séquences de relance selon le critère prédéfini. En outre, l'utilisation de valeurs météorologiques de rayonnement solaire $Gh$ permet de tenir compte des apports thermiques liés au rayonnement solaire pour estimer une variation de température intérieure. Cela permet d'adapter la durée pendant laquelle le système de chauffage 11 est activé avant d'atteindre une température de consigne en fonction des apports thermiques liés au soleil. Ainsi, la consommation liée au système de chauffage est réduite lorsque le rayonnement solaire est important.

Selon un exemple de réalisation, la pluralité de variables est regroupée dans un vecteur, dit vecteur explicatif de l'évolution de la température $X(t_i^j)$, défini à un instant sélectionné $t_i^j$ et en relation avec un instant initial $t_0^j$ d'une séquence de relance j, qui peut donc s'écrire :

$$X\left(t_i^j\right) = \left[T_{int}\left(t_0^j\right) - T_{ext}\left(t_i^j\right); \int_{t_0}^{t_i^j} Gh \; ; t_i^j - t_0^j \; ; 1\right]$$

L'unité de gestion 200 peut construire une matrice d'apprentissage, notée $X_a$, pour laquelle chaque ligne est associée à un instant sélectionné $t_i^j$ et correspond au vecteur explicatif de l'évolution de la température $X(t_i^j)$ déterminé audit instant sélectionné $t_i^j$, chaque instant sélectionné $t_i^j$ de la au moins une séquence de relance j sélectionnée étant associé à une ligne, dans un ordre donné.

Dans une étape 306 suivante, l'unité de gestion 200 détermine, pour chaque instant sélectionné $t_i^j$ de chaque séquence de relance j sélectionnée, une variation de température intérieure $\Delta T_{int}\left(t_i^j\right)$ entre ledit instant $t_i^j$ sélectionné et l'instant initial $t_0^j$ de ladite séquence de relance j. La variation de température intérieure $\Delta T_{int}\left(t_i^j\right)$ est égale à la différence entre la température intérieure $T_{int}$ mesurée à l'instant sélectionné $t_i^j$ et la température intérieure $T_{int}$

mesurée à l'instant $t_0^j$ . L'unité de gestion 200 calcule donc $\Delta T_{int}\left(t_i^j\right) = T_{int}\left(t_i^j\right) - T_{int}(t_0^j)$ .

Selon un exemple de réalisation, l'unité de gestion 200 construit un vecteur d'évolution thermique $Y_a$ qui est un vecteur colonne pour lequel chaque ligne, associée à un instant sélectionné $t_i^j$ de la au moins une séquence de relance j sélectionnée, correspond à la variation de température intérieure $\Delta T_{int}\left(t_i^j\right)$ déterminée audit instant sélectionné $t_i^j$ .

Chaque instant sélectionné $t_i^j$ de la au moins une séquence de relance j sélectionnée est associé à une ligne dudit vecteur d'évolution thermique $Y_a$ dans le même ordre que pour la matrice d'apprentissage $X_a$.

Les étapes 304 et 306 peuvent alternativement être réalisées en parallèle. Selon un autre exemple, l'étape 306 est réalisée avant l'étape 304.

Dans une étape 308 suivante, l'unité de gestion 200 calcule, par régression linéaire multiple, un coefficient associé à chaque variable. L'ensemble desdits coefficients est calculé de sorte à maximiser l'égalité, pour l'ensemble des instants sélectionnés $t_i^j$ , entre la variation de température intérieure $\Delta T_{int}\left(t_i^j\right)$ et la sommation des variables associées à leurs propres coefficients.

Selon un exemple de réalisation, l'unité de gestion 200 calcule un vecteur modèle b, comportant lesdits coefficients, et permettant de minimiser les erreurs de l'ensemble des équations $\Delta T_{int}\left(t_i^j\right) = X\left(t_i^j\right)b$ définies pour tous les instants sélectionnés $t_i^j$ de la au moins une séquence de relance j sélectionnée. Pour cela, l'unité de gestion 200 calcule le vecteur modèle $b$ par résolution de l'équation suivante : $b = (X_a' X_a)^{-1} X_a' Y_a$ , dans laquelle $X_a$' est la transposée de $X_a$ et $(X_a' X_a)^{-1}$ est la matrice inverse de $X_a' X_a$ .

Ainsi, le calcul du vecteur modèle par régression linéaire multiple permet d'obtenir un modèle précis permettant d'estimer la température intérieure tout en faisant appel à une quantité de données limitée.

L'unité de gestion 200 enregistre ensuite les coefficients calculés ou le vecteur modèle b obtenu, puis retourne à l'étape 300 initiale.

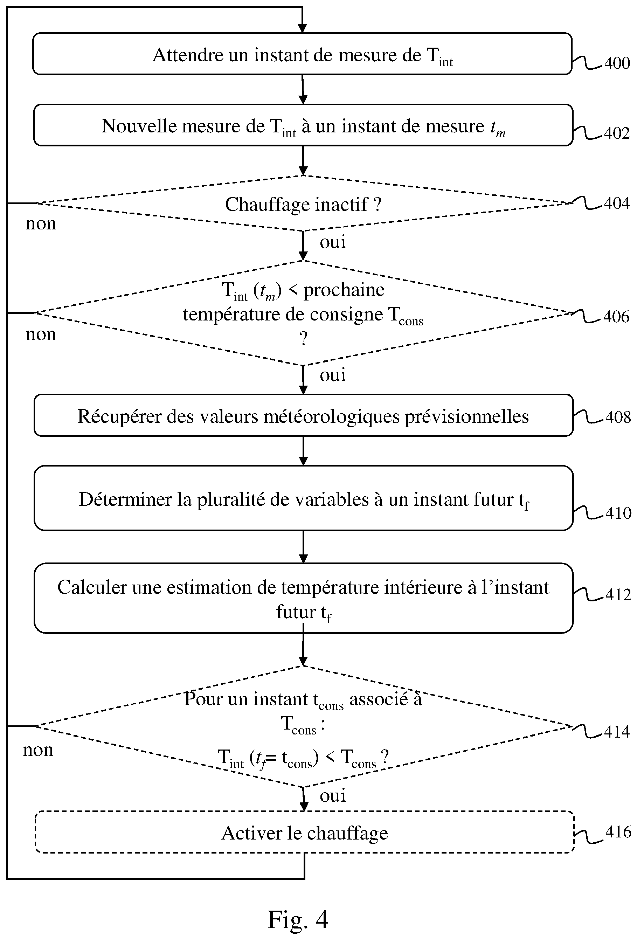

La Fig. 4 illustre schématiquement une phase d'exploitation du procédé de détermination d'un instant d'activation du système de chauffage 11, implémentée par l'unité de gestion 200.

Dans une étape 400 initiale, l'unité de gestion 200 attend une nouvelle mesure de la température intérieure $T_{int}$ en provenance du premier capteur de température 14.

Dans une étape 402 suivante, l'unité de gestion 200 reçoit en provenance du premier capteur de température 14 une nouvelle mesure de la température intérieure $T_{int}(t_m)$, effectuée à un instant de mesure $t_m$.

Dans une étape 404 optionnelle suivante, l'unité de gestion 200 obtient, par exemple sur requête, l'état du système de chauffage 11 à l'instant de mesure $t_m$, et détermine si, à l'instant de mesure $t_m$, le système de chauffage 11 est inactif. Si c'est le cas, une étape 406 est effectuée. Sinon, l'unité de gestion 200 retourne à l'étape 400 initiale.

A l'étape 406, optionnelle, l'unité de gestion 200 détermine si la température intérieure $T_{int}$ mesurée à l'instant de mesure $t_m$ est inférieure à une température de consigne $T_{cons}$ devant être atteinte à un instant de consigne futur $t_{cons}$, ledit instant de consigne futur $t_{cons}$ étant l'instant de consigne de la programmation temporelle survenant en premier après l'instant de mesure $t_m$. Ladite température de consigne $T_{cons}$ considérée doit donc être atteinte subséquemment à l'instant de mesure $t_m$. Si c'est le cas, une étape 408 est effectuée. Sinon, l'unité de gestion 200 retourne à l'étape 400 initiale.

A l'étape 408, l'unité de gestion 200 récupère, en réponse à une requête envoyée à destination du service 16 de fourniture de données météorologiques prévisionnelles, des valeurs météorologiques prévisionnelles de température extérieure $T_{ext}$ et de rayonnement solaire $Gh$ associées chacune à un instant de prévision futur, et pour des instants de prévision futurs compris entre l'instant de mesure $t_m$ et un instant futur $t_f$ auquel on souhaite déterminer une estimation de la température intérieure

Dans une étape 410 suivante, l'unité de gestion 200 détermine la pluralité de variables décrites à l'étape 304 définies audit instant futur tf et en relation avec l'instant de mesure $t_m$. En d'autres termes, l'unité de gestion 200 détermine la première variable, égale à la différence entre la température intérieure $T_{int}(t_m)$ à l'instant de mesure $t_m$ et la température extérieure $T_{ext}(t_f)$ à l'instant futur $t_f$, la deuxième variable, égale au rayonnement solaire cumulé entre l'instant de mesure $t_m$ et l'instant futur $t_f$, la troisième variable, égale à la différence temporelle entre l'instant futur $t_f$ et l'instant de mesure $t_m$, et la quatrième variable égale à 1.

Selon un exemple de réalisation, la pluralité de variables forme un vecteur explicatif de l'évolution de la température $X(t_f)$, défini à l'instant futur $t_f$ et en relation avec l'instant de mesure $t_m$, qui peut s'écrire :

$$X(t_f) = [T_{int}(t_m) - T_{ext}(t_f); \int_{t_m}^{t_f} Gh; t_f - t_m; 1]$$

Dans une étape 412 suivante, l'unité de gestion 200 détermine une estimation de température intérieure $T_{int}$ à l'instant futur $t_f$.

Pour cela, l'unité de gestion 200 calcule la variation de température intérieure estimée $\Delta T_{int\_estim}$ entre l'instant de mesure $t_m$ et l'instant futur $t_f$ par application des coefficients calculés à la pluralité de variables déterminées à l'étape 410 précédente. L'unité de gestion 200 utilise les coefficients calculés les plus récents, obtenus lors de l'étape 308 de l'implémentation la plus récente de la phase d'apprentissage.

Selon un exemple de réalisation, les coefficients sont appliqués par multiplication du vecteur modèle $b$ par le vecteur explicatif de l'évolution de la température $X(t_f)$ déterminé à l'étape 410 précédente. Dit autrement, l'unité de gestion 200 résout l'équation

$$\Delta T_{int\_estim} = X(t_f).b.$$

L'unité de gestion 200 en déduit une température intérieure $T_{int}(t_{cons})$ estimée à l'instant futur $t_f$ en ajoutant la température intérieure $T_{int}(t_m)$, mesurée à l'instant de mesure $t_m$ à la variation de température intérieure $\Delta T_{int\_estim}$ estimée entre l'instant de mesure $t_m$ et l'instant futur $t_f$, soit : $T_{int}(t_f) = T_{int}(t_m) + \Delta T_{int\_estim}$.

Avantageusement, l'unité de gestion 200 détermine en outre un instant d'activation du système de chauffage 11. L'unité de gestion 200 implémente pour cela les étapes optionnelles 404 et 406 et implémente les étapes 408, 410 et 412 en prenant pour instant futur $t_f$ l'instant de consigne futur $t_{cons}$ tel que défini à l'étape 406. L'unité de contrôle 200 effectue ensuite une étape 414.

A l'étape 414, l'unité de gestion 200 détermine si la température intérieure $T_{int}(t_{cons})$ estimée à l'instant de consigne futur $t_{cons}$ est inférieure à la température de consigne $T_{cons}$ considérée à l'étape 406. Si c'est le cas, l'unité de gestion 200 effectue une étape 416. Sinon, l'unité de gestion 200 retourne à l'étape 400 initiale.

A l'étape 416, l'unité de gestion 200 active le système de chauffage 11.

Il est ainsi possible de déterminer un instant d'activation du système de chauffage de manière précise et rapide et en tenant compte de variations de conditions météorologiques, ce qui permet d'assurer le respect d'une température de consigne tout en minimisant la consommation d'énergie.

L'unité de gestion 200 retourne ensuite à l'étape 400 initiale.

## Revendications

**1.** Procédé de détermination d'un instant d'activation d'un système de chauffage (11) d'un bâtiment (10), le procédé étant implémenté par une unité de gestion (200) connectée au système de chauffage (11), le système de chauffage chauffant le bâtiment (10) lorsque ledit système de chauffage (11) est activé, l'unité de gestion (200) comportant une programmation temporelle comprenant des températures de consigne, chaque température de consigne étant associée à un instant de consigne auquel la température de consigne doit être atteinte, le procédé comportant :

- enregistrer des mesures de la température intérieure du bâtiment, dite température intérieure, et de la température extérieure au bâtiment, dite température extérieure, et des valeurs météorologiques prévisionnelles comprenant des valeurs de la température extérieure et des valeurs de rayonnement solaire, chaque mesure étant associée à un instant de mesure, chaque valeur prévisionnelle étant associée à un instant de prévision,
- sélectionner (302) au moins une séquence de relance comportant des mesures de température intérieure et extérieure et des valeurs météorologiques prévisionnelles associées à des instants de mesure ou de prévision passés, chaque séquence de relance étant définie, à compter d'un instant initial, par une pluralité d'instants successifs, dits instants sélectionnés, auxquels les mesures de température intérieure vérifient au moins un critère prédéfini, le au moins un critère prédéfini requérant que la température intérieure est croissante et que la température intérieure est inférieure à une température de consigne associée à un instant de consigne de la programmation temporelle survenant en premier après chacun desdits instants sélectionnés, et le système de chauffage (11) étant en outre activé à chaque instant sélectionné de chaque séquence de relance,
- déterminer (304, 306), pour chaque instant sélectionné de chaque séquence de relance sélectionnée, une variation de température intérieure entre ledit instant sélectionné et l'instant initial de la séquence de relance ainsi qu'une pluralité de variables déterminées audit instant sélectionné et en relation avec ledit instant initial, lesdites variables influant sur la variation de température intérieure, une première variable étant égale à la différence entre la température intérieure à l'instant initial et la température extérieure audit instant sélectionné, une deuxième variable étant égale au rayonnement solaire cumulé entre l'instant initial et l'instant sélectionné, et une troisième variable étant égale à la différence temporelle entre l'instant sélectionné et l'instant initial,

- calculer (308), par régression linéaire multiple, un coefficient associé à chaque variable, les coefficients permettant de maximiser, pour l'ensemble des instants sélectionnés, l'égalité entre la variation de température intérieure et la somme des variables associées à leurs propres coefficients,

- mémoriser (308) les coefficients calculés pour activer le système de chauffage (11) à un instant d'une nouvelle mesure de la température intérieure en fonction d'une variation estimée de la température intérieure entre ledit instant de la nouvelle mesure et un instant futur, ledit instant futur correspondant à un instant de consigne de la programmation temporelle,

ladite variation estimée de la température intérieure étant déterminée (412) à partir desdits coefficients mémorisés, appliqués à la pluralité des variables déterminée à l'aide de valeurs météorologiques prévisionnelles et d'une mesure de la température intérieure audit instant de la nouvelle mesure, l'estimation de la température intérieure à l'instant de consigne est effectuée lorsque (404) le système de chauffage est inactif à l'instant de mesure et lorsque (406) la mesure de la température intérieure audit instant de mesure est inférieure à la température de consigne associée audit instant de consigne, la température intérieure est estimée à l'instant de consigne à partir de la variation estimée de la température intérieure entre l'instant de la nouvelle mesure et l'instant de consigne et de la mesure de la température intérieure à l'instant de la nouvelle mesure, le procédé comportant en outre d'activer (416) le système de chauffage si la température intérieure estimée audit instant de consigne est inférieure ou égale à la température de consigne associée audit instant de consigne.

2. Procédé selon la revendication 1, dans lequel sélectionner au moins une séquence de relance comporte de sélectionner un nombre minimal prédéfini de séquences de relance.

3. Procédé selon la revendication 1, dans lequel sélectionner au moins une séquence de relance comporte de sélectionner toutes les séquences de relance sur une période d'une durée prédéfinie.

4. Procédé selon l'une quelconque des revendications 1 à 3, dans lequel les valeurs météorologiques prévisionnelles comprennent des valeurs de la température extérieure, et comprennent des valeurs de rayonnement solaire.

5. Procédé selon la revendication précédente, dans lequel calculer (308), par régression linéaire multiple, un coefficient associé à chaque variable comprend de calculer en outre un coefficient associé à une constante égale à 1.

6. Procédé selon l'une des revendications 1 à 5, dans lequel les coefficients calculés sont obtenus, sous forme d'un vecteur b comprenant chacun desdits coefficients, par résolution de l'équation $b = (X_a'X_a)^{-1} X_a'Y_a$, dans laquelle $X_a$ représente une matrice comportant, pour chaque ligne, un vecteur explicatif associé à un instant sélectionné, chaque instant sélectionné étant associé à une ligne, chaque vecteur explicatif comprenant les variables déterminées à l'instant sélectionné associé et en relation avec l'instant initial de la séquence de relance, dans laquelle $Y_a$ représente un vecteur comportant, pour chaque ligne, la variation de température intérieure associée à un instant sélectionné, égale à la variation de température intérieure entre ledit instant sélectionné et l'instant initial de la séquence de relance, chaque instant sélectionné étant associé à une ligne dans le même ordre que pour la matrice d'apprentissage $X_a$, et dans laquelle $X_a'$ est la transposée de $X_a$ et $(X_a'X_a)^{-1}$ est la matrice inverse de $X_a'X_a$.

7. Unité de gestion (200) destinée à gérer la thermique d'un bâtiment (10), l'unité de gestion (200) étant connectée à un système de chauffage (11), le système de chauffage chauffant le bâtiment (10) lorsque ledit système de chauffage (11) est activé, , l'unité de gestion (200) comportant une programmation temporelle comprenant des températures de consigne, chaque température de consigne étant associée à un instant de consigne auquel la température de consigne doit être atteinte, et l'unité de gestion (200) comportant de la circuiterie électronique configurée pour :

- enregistrer des mesures de la température intérieure du bâtiment (10), dite température intérieure, et de la température extérieure au bâtiment, dite température extérieure, et des valeurs météorologiques prévisionnelles comprenant des valeurs de la température extérieure et des valeurs de rayonnement solaire, chaque mesure étant associée à un instant de mesure, chaque valeur météorologique prévisionnelle étant associée à un instant de prévision,

- sélectionner au moins une séquence de relance comportant des mesures de température intérieure et

EP 4 390 607 B1

extérieure et des valeurs météorologiques prévisionnelles associées à des instants de mesure ou de prévision passés, chaque séquence de relance étant définie, à compter d'un instant initial, par une pluralité d'instants successifs, dits instants sélectionnés, auxquels les mesures de température intérieure vérifient au moins un critère prédéfini, le au moins un critère prédéfini requérant que la température intérieure est croissante et que la température intérieure est inférieure à une température de consigne associée à un instant de consigne de la programmation temporelle survenant en premier après chacun desdits instants sélectionnés, et le système de chauffage (11) étant en outre activé à chaque instant sélectionné de chaque séquence de relance,

- déterminer, pour chaque instant sélectionné de chaque séquence de relance sélectionnée, une variation de température intérieure entre ledit instant sélectionné et l'instant initial de la séquence de relance ainsi qu'une pluralité de variables déterminées audit instant sélectionné et en relation avec ledit instant initial, lesdites variables influant sur la variation de température intérieure, une première variable étant égale à la différence entre la température intérieure à l'instant initial et la température extérieure audit instant sélectionné, une deuxième variable étant égale au rayonnement solaire cumulé entre l'instant initial et l'instant sélectionné, et une troisième variable étant égale à la différence temporelle entre l'instant sélectionné et l'instant initial,

- calculer, par régression linéaire multiple, un coefficient associé à chaque variable, les coefficients permettant de maximiser, pour l'ensemble des instants sélectionnés, l'égalité entre la variation de température intérieure et la somme des variables associées à leurs propres coefficients,

- mémoriser (308) les coefficients calculés pour activer le système de chauffage (11) à un instant d'une nouvelle mesure de la température intérieure en fonction d'une variation estimée de la température intérieure entre ledit instant de la nouvelle mesure et un instant futur, ledit instant futur correspondant à un instant de consigne de la programmation temporelle,

ladite variation estimée de la température intérieure étant déterminée (412) à partir desdits coefficients mémorisés, appliqués à la pluralité des variables déterminée à l'aide de valeurs météorologiques prévisionnelles et d'une mesure de la température intérieure audit instant de la nouvelle mesure, l'estimation de la température intérieure à l'instant de consigne est effectuée lorsque (404) le système de chauffage est inactif à l'instant de mesure et lorsque (406) la mesure de la température intérieure audit instant de mesure est inférieure à la température de consigne associée audit instant de consigne, la température intérieure est estimée à l'instant de consigne à partir de la variation estimée de la température intérieure entre l'instant de la nouvelle mesure et l'instant de consigne et de la mesure de la température intérieure à l'instant de la nouvelle mesure, le procédé comportant en outre d'activer (416) le système de chauffage si la température intérieure estimée audit instant de consigne est inférieure ou égale à la température de consigne associée audit instant de consigne.

8. Produit programme d'ordinateur pouvant être stocké sur un support et/ou téléchargé d'un réseau de communication, afin d'être lu par un processeur, et comprenant des instructions pour implémenter le procédé selon l'une des revendications 1 à 6, lorsque ledit programme d'ordinateur est exécuté par le processeur.

9. Support de stockage d'informations stockant un programme d'ordinateur comprenant des instructions pour implémenter le procédé selon l'une des revendications 1 à 6 lorsque ledit programme d'ordinateur est lu depuis ledit support de stockage et exécuté par le processeur.

**Patentansprüche**

1. Verfahren zur Bestimmung eines Aktivierungszeitpunkts eines Heizsystems (11) eines Gebäudes (10), wobei das Verfahren von einer an das Heizsystem (11) angeschlossenen Steuerungseinheit (200) implementiert wird, wobei das Heizsystem das Gebäude (10) heizt, wenn das Heizsystem (11) aktiviert ist, wobei die Steuerungseinheit (200) eine zeitliche Programmierung beinhaltet, die Solltemperaturen umfasst, wobei jede Solltemperatur einem Sollzeitpunkt zugeordnet ist, zu dem die Solltemperatur erreicht sein muss, das Verfahren umfassend:

- Aufzeichnen von Messungen der Temperatur innerhalb des Gebäudes, Innentemperatur genannt, und der Temperatur außerhalb des Gebäudes, Außentemperatur genannt, und von Wettervorhersagewerten, die Werte der Außentemperatur und Sonnenstrahlungswerte umfassen, wobei jede Messung einem Messzeitpunkt zugeordnet ist, wobei jeder Vorhersagewert einem Vorhersagezeitpunkt zugeordnet ist,

- Auswählen (302) mindestens einer Anlaufsequenz, die Messungen von Innen'- und Außentemperatur und Wettervorhersagewerte, die vergangenen Mess- oder Vorhersagezeitpunkten zugeordnet sind, beinhaltet, wobei jede Anlaufsequenz, von einem Ausgangszeitpunkt an, durch eine Vielzahl von aufeinander folgenden Zeitpunkten, ausgewählte Zeitpunkte genannt, definiert wird, zu denen die Messungen der Innentemperatur mindestens ein vordefiniertes Kriterium erfüllen, wobei das mindestens eine vordefinierte Kriterium erfordert, dass die Innentemperatur steigt und dass die Innentemperatur niedriger als eine Solltemperatur ist, die einem Sollzeitpunkt der zeitlichen Programmierung zugeordnet ist, der nach jedem der ausgewählten Zeitpunkte zuerst eintritt, und wobei das Heizsystem (11) ferner zu jedem ausgewählten Zeitpunkt jeder Anlaufsequenz aktiviert wird,

- Bestimmen (304, 306), für jeden ausgewählten Zeitpunkt jeder ausgewählten Anlaufsequenz, einer Änderung der Innentemperatur zwischen dem ausgewählten Zeitpunkt und dem Ausgangszeitpunkt der Anlaufsequenz sowie einer Vielzahl von Variablen, die zu dem ausgewählten Zeitpunkt und in Verbindung mit dem Ausgangszeitpunkt bestimmt werden, wobei die Variablen die Änderung der Innentemperatur beeinflussen, wobei eine erste Variable gleich der Differenz zwischen der Innentemperatur zu dem Ausgangszeitpunkt und der Außentemperatur zu dem ausgewählten Zeitpunkt ist, wobei eine zweite Variable gleich der kumulierten Sonnenstrahlung zwischen dem Ausgangszeitpunkt und dem ausgewählten Zeitpunkt ist und wobei eine dritte Variable gleich der zeitlichen Differenz zwischen dem ausgewählten Zeitpunkt und dem Ausgangszeitpunkt ist,

- Berechnen (308), durch multiple lineare Regression, eines jeder Variable zugeordneten Koeffizienten, wobei die Koeffizienten es ermöglichen, für die Gesamtheit der gewählten Zeitpunkte die Gleichheit zwischen der Änderung der Innentemperatur und der Summe der ihren eigenen Koeffizienten zugeordneten Variablen zu maximieren,

- Speichern (308) der berechneten Koeffizienten, um das Heizsystem (11) zu einem Zeitpunkt einer neuen Messung der Innentemperatur in Abhängigkeit von einer geschätzten Änderung der Innentemperatur zwischen dem Zeitpunkt der neuen Messung und einem zukünftigen Zeitpunkt zu aktivieren, wobei der zukünftige Zeitpunkt einem Sollzeitpunkt der zeitlichen Programmierung entspricht, wobei die geschätzte Änderung der Innentemperatur ausgehend von den gespeicherten Koeffizienten bestimmt (412) wird, die auf die bestimmte Vielzahl der Variablen angewendet werden, die mithilfe von Wettervorhersagewerten und einer Messung der Innentemperatur zu dem Zeitpunkt der neuen Messung bestimmt wird, wobei das Schätzen der Innentemperatur zu dem Sollzeitpunkt erfolgt, wenn (404) das Heizsystem zu dem Messzeitpunkt inaktiv ist und wenn (406) die Messung der Innentemperatur zu dem Messzeitpunkt niedriger als die dem Sollzeitpunkt zugeordnete Solltemperatur ist, wobei die Innentemperatur zu dem Sollzeitpunkt ausgehend von der geschätzten Änderung der Innentemperatur zwischen dem Zeitpunkt der neuen Messung und dem Sollzeitpunkt und von der Messung der Innentemperatur zu dem Zeitpunkt der neuen Messung geschätzt wird, wobei das Verfahren ferner das Aktivieren (416) des Heizsystems beinhaltet, wenn die zu dem Sollzeitpunkt geschätzte Innentemperatur niedriger als oder gleich der dem Sollzeitpunkt zugeordneten Solltemperatur ist.

2. Verfahren nach Anspruch 1, wobei das Auswählen mindestens einer Anlaufsequenz das Auswählen einer vordefinierten Mindestanzahl von Anlaufsequenzen beinhaltet.

3. Verfahren nach Anspruch 1, wobei das Auswählen mindestens einer Anlaufsequenz das Auswählen aller Anlaufsequenzen über einen Zeitraum mit einer vordefinierten Dauer beinhaltet.

4. Verfahren nach einem der Ansprüche 1 bis 3, wobei die Wettervorhersagewerte Werte der Außentemperatur umfassen und Sonnenstrahlungswerte umfassen.

5. Verfahren nach dem vorhergehenden Anspruch, wobei das Berechnen (308), durch multiple lineare Regression, eines jeder Variable zugeordneten Koeffizienten ferner das Berechnen eines Koeffizienten umfasst, der einer Konstante gleich 1 zugeordnet ist.

6. Verfahren nach einem der Ansprüche 1 bis 5, wobei die berechneten Koeffizienten in Form eines Vektors b, der jeden der Koeffizienten umfasst, durch Lösen der Gleichung $b = (X_a' X_a)^{-1} X_a' Y_a$ erhalten werden, worin $X_a$ eine Matrix darstellt, die, für jede Zeile, einen erklärenden Vektor beinhaltet, der einem ausgewählten Zeitpunkt zugeordnet ist, wobei jeder ausgewählte Zeitpunkt einer Zeile zugeordnet ist, wobei jeder erklärende Vektor die Variablen umfasst, die zu dem zugeordneten ausgewählten Zeitpunkt und in Verbindung mit dem Ausgangszeitpunkt der Anlaufsequenz bestimmt werden, worin $Y_a$ einen Vektor darstellt, der, für jede Zeile, die Änderung der einem ausgewählten Zeitpunkt zugeordneten Innentemperatur gleich der Änderung der Innentemperatur zwischen dem ausgewählten Zeitpunkt und dem Ausgangszeitpunkt der Anlaufsequenz beinhaltet, wobei jeder ausgewählte Zeitpunkt einer Zeile in der gleichen Reihenfolge wie bei der Lernmatrix $X_a$ zugeordnet ist, und worin $X_a'$ die transponierte Matrix von $X_a$ ist und $(X_a' X_a)^{-1}$ die inverse Matrix von $X_a' X_a$ ist.

7. Steuerungseinheit (200), die dazu bestimmt ist, die Thermik eines Gebäudes (10) zu steuern, wobei die Steuerungseinheit (200) an ein Heizsystem (11) angeschlossen ist, wobei das Heizsystem das Gebäudes (10) heizt, wenn das Heizsystem (11) aktiviert ist, wobei die Steuerungseinheit (200) eine zeitliche Programmierung beinhaltet, die Solltemperaturen umfasst, wobei jede Solltemperatur einem Sollzeitpunkt zugeordnet ist, zu dem die Solltemperatur erreicht sein muss, und wobei die Steuerungseinheit (200) eine elektronische Schaltungsanordnung umfasst, die ausgestaltet ist zum:

- Aufzeichnen von Messungen der Temperatur innerhalb des Gebäudes (10), Innentemperatur genannt, und der Temperatur außerhalb des Gebäudes, Außentemperatur genannt, und von Wettervorhersagewerten, die Werte der Außentemperatur und Sonnenstrahlungswerte umfassen, wobei jede Messung einem Messzeitpunkt zugeordnet ist, wobei jeder Vorhersagewert einem Vorhersagezeitpunkt zugeordnet ist,
- Auswählen mindestens einer Anlaufsequenz, die Messungen von Innen- und Außentemperatur und Wettervorhersagewerte, die vergangenen Mess- oder Vorhersagezeitpunkten zugeordnet sind, beinhaltet, wobei jede Anlaufsequenz, von einem Ausgangszeitpunkt an, durch eine Vielzahl von aufeinander folgenden Zeitpunkten, ausgewählte Zeitpunkte genannt, definiert wird, zu denen die Messungen der Innentemperatur mindestens ein vordefiniertes Kriterium erfüllen, wobei das mindestens eine vordefinierte Kriterium erfordert, dass die Innentemperatur steigt und dass die Innentemperatur niedriger als eine Solltemperatur ist, die einem Sollzeitpunkt der zeitlichen Programmierung zugeordnet ist, der nach jedem der ausgewählten Zeitpunkte zuerst eintritt, und wobei das Heizsystem (11) ferner zu jedem ausgewählten Zeitpunkt jeder Anlaufsequenz aktiviert wird,
- Bestimmen, für jeden ausgewählten Zeitpunkt jeder ausgewählten Anlaufsequenz, einer Änderung der Innentemperatur zwischen dem ausgewählten Zeitpunkt und dem Ausgangszeitpunkt der Anlaufsequenz sowie einer Vielzahl von Variablen, die zu dem ausgewählten Zeitpunkt und in Verbindung mit dem Ausgangszeitpunkt bestimmt werden, wobei die Variablen die Änderung der Innentemperatur beeinflussen, wobei eine erste Variable gleich der Differenz zwischen der Innentemperatur zu dem Ausgangszeitpunkt und der Außentemperatur zu dem ausgewählten Zeitpunkt ist, wobei eine zweite Variable gleich der kumulierten Sonnenstrahlung zwischen dem Ausgangszeitpunkt und dem ausgewählten Zeitpunkt ist und wobei eine dritte Variable gleich der zeitlichen Differenz zwischen dem ausgewählten Zeitpunkt und dem Ausgangszeitpunkt ist,
- Berechnen, durch multiple lineare Regression, eines jeder Variable zugeordneten Koeffizienten, wobei die Koeffizienten es ermöglichen, für die Gesamtheit der gewählten Zeitpunkte die Gleichheit zwischen der Änderung der Innentemperatur und der Summe der ihren eigenen Koeffizienten zugeordneten Variablen zu maximieren,
- Speichern (308) der berechneten Koeffizienten, um das Heizsystem (11) zu einem Zeitpunkt einer neuen Messung der Innentemperatur in Abhängigkeit von einer geschätzten Änderung der Innentemperatur zwischen dem Zeitpunkt der neuen Messung und einem zukünftigen Zeitpunkt zu aktivieren, wobei der zukünftige Zeitpunkt einem Sollzeitpunkt der zeitlichen Programmierung entspricht, wobei die geschätzte Änderung der Innentemperatur ausgehend von den gespeicherten Koeffizienten bestimmt (412) wird, die auf die bestimmte Vielzahl der Variablen angewendet werden, die mithilfe von Wettervorhersagewerten und einer Messung der Innentemperatur zu dem Zeitpunkt der neuen Messung bestimmt wird, wobei das Schätzen der Innentemperatur zu dem Sollzeitpunkt erfolgt, wenn (404) das Heizsystem zu dem Messzeitpunkt inaktiv ist und wenn (406) die Messung der Innentemperatur zu dem Messzeitpunkt niedriger als die dem Sollzeitpunkt zugeordnete Solltemperatur ist, wobei die Innentemperatur zu dem Sollzeitpunkt ausgehend von der geschätzten Änderung der Innentemperatur zwischen dem Zeitpunkt der neuen Messung und dem Sollzeitpunkt und von der Messung der Innentemperatur zu dem Zeitpunkt der neuen Messung geschätzt wird, wobei das Verfahren ferner das Aktivieren (416) des Heizsystems beinhaltet, wenn die zu dem Sollzeitpunkt geschätzte Innentemperatur niedriger als oder gleich der dem Sollzeitpunkt zugeordneten Solltemperatur ist.

8. Computerprogrammprodukt, das auf einem Medium gespeichert und/oder aus einem Kommunikationsnetzwerk heruntergeladen werden kann, um von einem Prozessor gelesen zu werden, und das Anweisungen umfasst, die, wenn das Computerprogramms durch den Prozessor ausgeführt wird, das Verfahren nach einem der Ansprüche 1 bis 6 implementieren.

9. Informationsspeichermedium, das ein Computerprogramm speichert, das Anweisungen umfasst, die, wenn das Computerprogramm von dem Speichermedium gelesen und durch den Prozessor ausgeführt wird, das Verfahren nach einem der Ansprüche 1 bis 6 implementieren.

**Claims**

1. Method for determining a time of activation of a heating system (11) of a building (10), the method being implemented by a management unit (200) connected to the heating system (11), the heating system heating the building (10) when said heating system (11) is activated, the management unit (200) comprising a schedule comprising temperature settings, each temperature setting being associated with a set time at which the temperature setting must be reached, the method comprising:

- recording measurements of the temperature inside the building, called the indoor temperature, and of the temperature outside the building, called the outdoor temperature, and of forecast meteorological values comprising values of the outdoor temperature and values of solar insolation, each measurement being associated with a measurement time, each forecast value being associated with a forecast time,
- selecting (302) at least one launch sequence comprising indoor and outdoor temperature measurements and forecast meteorological values associated with past measurement or forecast times, each launch sequence being defined, starting from an initial time, by a plurality of successive times, called selected times, at which the indoor temperature measurements satisfy at least one predefined criterion, the at least one predefined criterion requiring the indoor temperature to be increasing and the indoor temperature to be less than a temperature setting associated with a set time of the schedule reached first after each of said selected times, and the heating system (11) further being activated at each selected time of each launch sequence,
- determining (304, 306), for each selected time of each selected launch sequence, a variation in indoor temperature between said selected time and the initial time of the launch sequence, and a plurality of variables determined at said selected time and in relation to said initial time, said variables influencing the variation in indoor temperature, a first variable being equal to the difference between the indoor temperature at the initial time and the outdoor temperature at said selected time, a second variable being equal to the cumulative solar insolation between the initial time and the selected time, and a third variable being equal to the time difference between the selected time and the initial time,
- calculating (308), by multiple linear regression, a coefficient associated with each variable, the coefficients making it possible to maximize, for all the selected times, the equality between the variation in indoor temperature and the sum of the variables associated with their own coefficients,
- storing (308) the calculated coefficients with a view to activating the heating system (11) at a time of a new measurement of the indoor temperature as a function of an estimated variation in the indoor temperature between said time of the new measurement and a future time, said future time corresponding to a set time of the schedule, said estimated variation in the indoor temperature being determined (412) from said stored coefficients, applied to the plurality of variables determined by means of forecast meteorological values and of a measurement of the indoor temperature at said time of the new measurement, the indoor temperature at the set time being estimated when (404) the heating system is inactive at the measurement time and when (406) the measurement of the indoor temperature at said measurement time is less than the temperature setting associated with said set time, the indoor temperature being estimated at the set time from the estimated variation in the indoor temperature between the time of the new measurement and the set time and from the measurement of the indoor temperature at the time of the new measurement, the method further comprising activating (416) the heating system if the estimated indoor temperature at said set time is less than or equal to the temperature setting associated with said set time.

2. Method according to Claim 1, wherein selecting at least one launch sequence comprises selecting a predefined minimum number of launch sequences.

3. Method according to Claim 1, wherein selecting at least one launch sequence comprises selecting all the launch sequences in a period of a predefined duration.

4. Method according to any of Claims 1 to 3, wherein the forecast meteorological values comprise values of the outdoor temperature, and comprise values of solar insolation.

5. Method according to the preceding claim, wherein calculating (308), by multiple linear regression, a coefficient associated with each variable further comprises calculating a coefficient associated with a constant equal to 1.

6. Method according to any of Claims 1 to 5, wherein the calculated coefficients are obtained, in the form of a vector b containing each of said coefficients, by solving the equation $b = (X_a' X_a)^{-1} X_a' Y_a$, in which $X_a$ is a matrix containing, in each row, an explanatory vector associated with a selected time, each selected time being associated with a row, each explanatory vector containing the variables determined at the associated selected time and in relation with the initial time of the launch sequence, in which $Y_a$ is a vector containing, in each row, the variation in indoor temperature associated with a selected time, equal to the variation in indoor temperature between said selected time and the initial time of the launch sequence, each selected time being associated with a row in the same order as in the learning matrix $X_a$, and in which $X_a'$ is the transpose of $X_a$ and $(X_a'X_a)^{-1}$ is the inverse matrix of $X_a'X_a$ .

7. Management unit (200) for managing the temperature of a building (10), the management unit (200) being connected to a heating system (11), the heating system heating the building (10) when said heating system (11) is activated, the management unit (200) comprising a schedule comprising temperature settings, each temperature setting being associated with a set time at which the temperature setting must be reached, and the management unit (200) comprising electronic circuitry configured to:

   - record measurements of the temperature inside the building (10), called the indoor temperature, and of the temperature outside the building, called the outdoor temperature, and of forecast meteorological values comprising values of the outdoor temperature and values of solar insolation, each measurement being associated with a measurement time, each forecast meteorological value being associated with a forecast time,
   - select at least one launch sequence comprising indoor and outdoor temperature measurements and forecast meteorological values associated with past measurement or forecast times, each launch sequence being defined, starting from an initial time, by a plurality of successive times, called selected times, at which the indoor temperature measurements satisfy at least one predefined criterion, the at least one predefined criterion requiring the indoor temperature to be increasing and the indoor temperature to be less than a temperature setting associated with a set time of the schedule reached first after each of said selected times, and the heating system (11) further being activated at each selected time of each launch sequence,
   - determine, for each selected time of each selected launch sequence, a variation in indoor temperature between said selected time and the initial time of the launch sequence, and a plurality of variables determined at said selected time and in relation to said initial time, said variables influencing the variation in indoor temperature, a first variable being equal to the difference between the indoor temperature at the initial time and the outdoor temperature at said selected time, a second variable being equal to the cumulative solar insolation between the initial time and the selected time, and a third variable being equal to the time difference between the selected time and the initial time,
   - calculate, by multiple linear regression, a coefficient associated with each variable, the coefficients making it possible to maximize, for all the selected times, the equality between the variation in indoor temperature and the sum of the variables associated with their own coefficients,
   - store (308) the calculated coefficients with a view to activating the heating system (11) at a time of a new measurement of the indoor temperature as a function of an estimated variation in the indoor temperature between said time of the new measurement and a future time, said future time corresponding to a set time of the schedule, said estimated variation in the indoor temperature being determined (412) from said stored coefficients, applied to the plurality of variables determined by means of forecast meteorological values and of a measurement of the indoor temperature at said time of the new measurement, the indoor temperature at the set time being estimated when (404) the heating system is inactive at the measurement time and when (406) the measurement of the indoor temperature at said measurement time is less than the temperature setting associated with said set time, the indoor temperature being estimated at the set time from the estimated variation in the indoor temperature between the time of the new measurement and the set time and from the measurement of the indoor temperature at the time of the new measurement, the method further comprising activating (416) the heating system if the estimated indoor temperature at said set time is less than or equal to the temperature setting associated with said set time.

8. Computer program product capable of being stored on a medium and/or downloaded from a communication network, in order to be read by a processor, and comprising instructions for implementing the method according to any of Claims 1 to 6, when said computer program is executed by the processor.

9. Information storage medium storing a computer program comprising instructions for implementing the method according to any of Claims 1 to 6 when said computer program is read from said storage medium and executed by the processor.

Fig. 1

Fig. 2

```
┌──────────────────────────────────────────────┐
│   ┌──────────────────────────────────────┐    │
└──▶│        Attendre déclenchement        ├──── 300
    └──────────────────────────────────────┘
                      │
                      ▼
    ┌──────────────────────────────────────┐
    │     Sélectionner des séquences de     ├──── 302
    │                relance                │
    └──────────────────────────────────────┘
                      │
                      ▼
    ┌──────────────────────────────────────┐
    │  Déterminer une pluralité de variables│
    │  pour chaque instant des séquences de ├──── 304
    │         relance sélectionnées         │
    └──────────────────────────────────────┘
                      │
                      ▼
    ┌──────────────────────────────────────┐
    │ Déterminer une variation de température│
    │ intérieure pour chaque instant des    ├──── 306
    │  séquences de relance sélectionnées   │
    └──────────────────────────────────────┘
                      │
                      ▼
    ┌──────────────────────────────────────┐
    │ Calculer et enregistrer un coefficient├──── 308
    │      associé à chaque variable        │
    └──────────────────────────────────────┘
```

Fig. 3

```
┌─────────────────────────────────────────────────────────┐
│          Attendre un instant de mesure de T_int          │──400
└─────────────────────────────────────────────────────────┘
                            │
┌─────────────────────────────────────────────────────────┐
│   Nouvelle mesure de T_int à un instant de mesure t_m    │──402
└─────────────────────────────────────────────────────────┘
                            │
                 ◇ Chauffage inactif ? ◇──────404
              non │                    │ oui
```

Chauffage inactif ? ── 404

$T_{int}\ (t_m) <$ prochaine température de consigne $T_{cons}$ ? ── 406

non

oui

Récupérer des valeurs météorologiques prévisionnelles ── 408

Déterminer la pluralité de variables à un instant futur $t_f$ ── 410

Calculer une estimation de température intérieure à l'instant futur $t_f$ ── 412

Pour un instant $t_{cons}$ associé à $T_{cons}$ :
$T_{int}\ (t_f = t_{cons}) < T_{cons}$ ? ── 414

non

oui

Activer le chauffage ── 416

## Fig. 4

**EP 4 390 607 B1**

## RÉFÉRENCES CITÉES DANS LA DESCRIPTION

**Documents brevets cités dans la description**

- EP 3528083 B1